## Europäisches Patentamt
## European Patent Office
## Office européen des brevets

(11) Publication number: **0 120 823**
**B1**

(12) **EUROPEAN PATENT SPECIFICATION**

(45) Date of publication of patent specification: **20.05.87**

(51) Int. Cl.⁴: **B 65 G 1/04,** B 65 G 57/30

(21) Application number: **84850047.6**

(22) Date of filing: **10.02.84**

(54) **A method and magazine for storing and handling pallets.**

(30) Priority: **10.02.83 SE 8300725**

(43) Date of publication of application:
**03.10.84 Bulletin 84/40**

(45) Publication of the grant of the patent:
**20.05.87 Bulletin 87/21**

(84) Designated Contracting States:
**AT BE CH DE FR GB IT LI LU NL SE**

(56) References cited:
**DE-B-1 192 111**
**FR-A-2 123 177**

(73) Proprietor: **Aktiebolaget Bygg- och Transportekonomi (BT)**
**S-161 84 Bromma (SE)**

(72) Inventor: **Törnqvist, Anders**
**Östbergavägen 5**
**S-590 21 Väderstad (SE)**

(74) Representative: **Norin, Klas**
**Kooperativa förbundet Patent Department P.O. Box 15200**
**S-104 65 Stockholm (SE)**

EP 0 120 823 B1

Courier Press, Leamington Spa, England.

## Description

The present invention relates to a method for storing and handling pallets in which pallets are introduced into a receiving part at the lower end of a magazine which rests upon a support surface; in which prior to introducing a further pallet into said magazine, those pallets present in said magazine are lifted vertically by means of a lifting arrangement incorporated therein, so that the receiving part of said magazine is prepared for receiving said further pallet; in which the raised pallets are subsequently lowered with the aid of said lifting arrangement, so that said pallets rest on the further pallet; and in which the pallets being successively removed beginning with the lowermost pallet located nearest the support surface, while the remaining pallets are lifted by the lifting arrangement. The invention also relates to a magazine for storing and handling pallets, including a support frame-structure having a bottom part intended to be placed on a support surface; a free space arranged in the support frame-structure for receiving and storing superposed pallets; a motor driven lifting arrangement arranged on the supporting frame-structure and intended to coact with pallets located in said space, said lifting arrangement including gripping means being movable between a gripping and a release position, such that they are able either to lift said pallet or to pass by said pallets when introducing further pallets into said magazine or discharging pallets therefrom. Such a method and magazine is known from DE—B—1192111.

The majority of working activities in which material handling forms an essential part normally include the use of pallets, to facilitate the handling and transportation of goods, particularly heavy goods. Such handling and transportation may concern the delivery of goods on pallets, or the internal processing or treatment of goods, with the goods raised on pallets. Prior to being used, the empty pallets are normally stacked, one upon the other, at one or more storage locations within the working area. The pallets are distributed one at a time, normally by lifting the uppermost pallet manually from a pallet stack and placing it onto a pallet trolley. The pallets normally used are known as EUR-pallets and are approximately 25 kg in weight. It will be readily seen that manual lifting of such pallets should be avoided. In addition, the floor space occupied by such a stack is not utilized to the full, since the height of the stack must be such as to enable the uppermost pallet to be reached and lifted down manually.

Mechanical systems for the handling of empty pallets, known from DE—B—1192111, are unable to solve the aforementioned problem, since these systems have been devised solely for pallets which are to move on roller conveyors. The pallets can only be discharged from the magazine one at a time, with the aid of mechanical devices located by the sides of the pallets and beneath the same. The pallets are fed from the magazine onto a roller table, which also forms the bottom of the magazine. Such systems cannot be used together with conventional low-lift pallet trolleys, without using separate lifting arrangements or high-lift trucks.

One object of the present invention is to provide a method for mechanically storing and handling pallets in which the afore-mentioned disadvantages are avoided and in which there is provided a rational pallet handling system with a good working environment. A further object is to provide a magazine with which the method can be carried out. These objects, together with further objects of and advantages afforded by the invention will be apparent from the following description. The objects of the invention are realized by the present invention, the characterizing features of which are set forth in the following claims.

The invention will now be described in more detail with reference to the accompanying drawings, in which

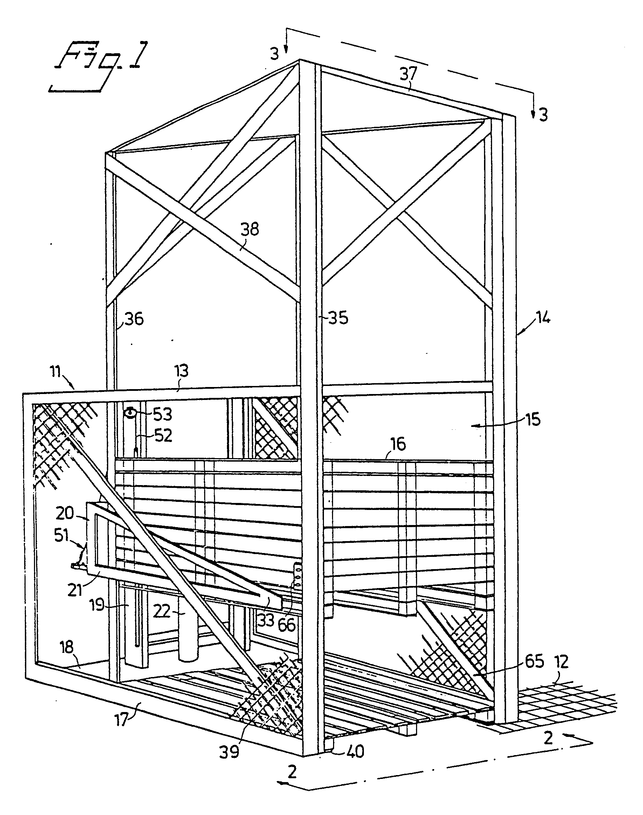

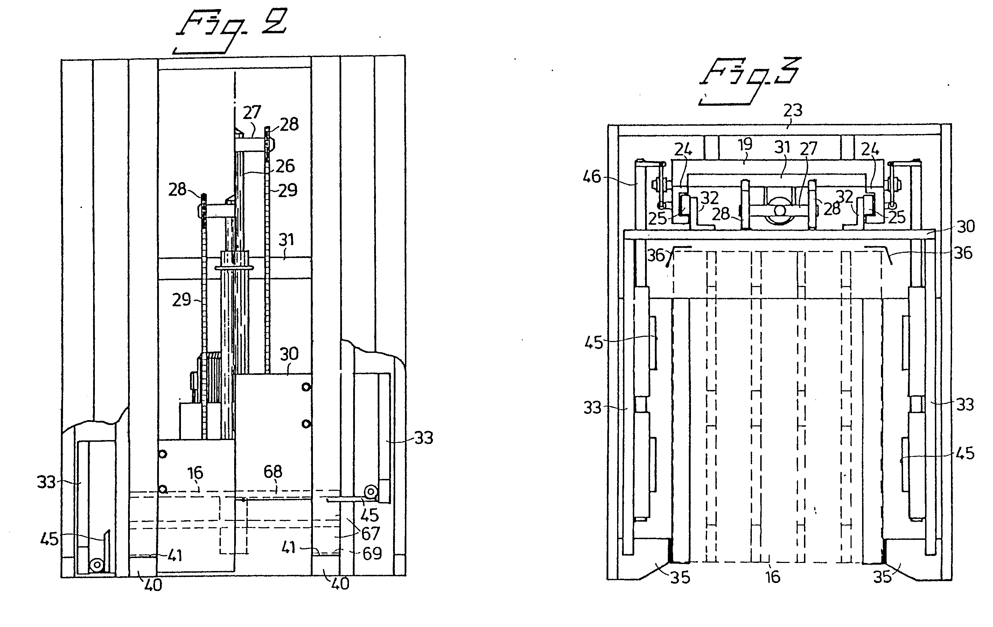

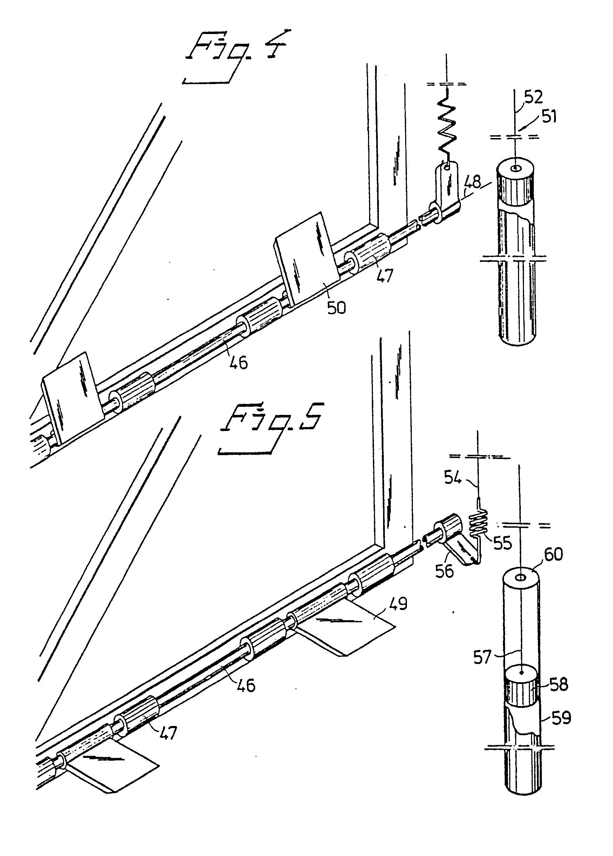

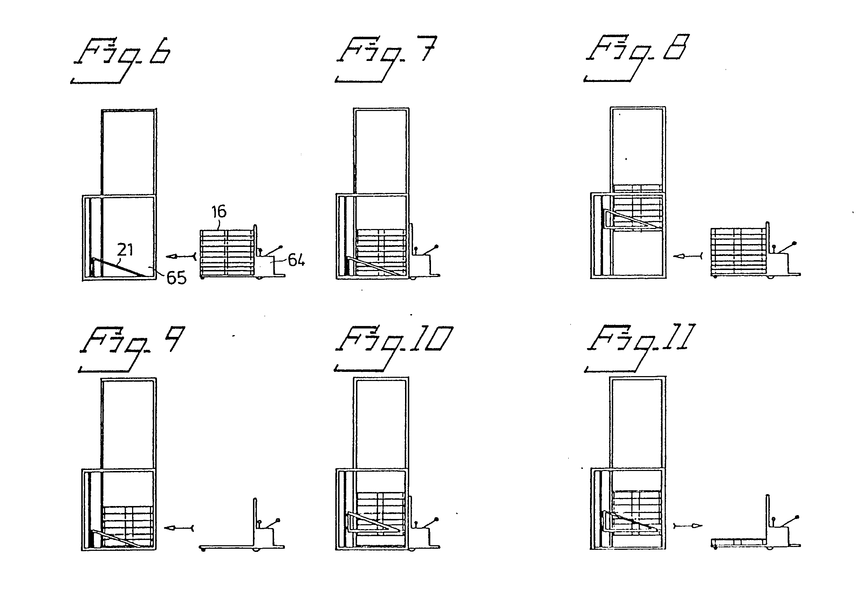

Figure 1 is a perspective view of a magazine according to the invention;

Figure 2 is a view seen from the front in accordance with the arrows 2—2 in Figure 1;

Figure 3 is a view from the top in accordance with the arrows 3—3 in Figure 1;

Figures 4 and 5 illustrate in detail a lifting arm having gripping means shown in different positions; and

Figures 6—11 illustrate the magazine of Figure 1 schematically and in side view, and also illustrate the method of feeding pallets into or out of the magazine.

In the illustrated embodiment, the magazine comprises a support-frame-structure 11, which is placed on a support surface 12, for example the floor of a workshop. The frame structure comprises a plurality of beams 13, which are welded together to form a high-rise magazine body 14. Within the body 14 there is provided a free space 15 for receiving and storing pallets 16. A bed plate 18 is fixedly attached to the bottom part 17 of the supporting-frame structure. Arranged on the bed plate 18 is a frame 19 for accommodating a lifting arrangement 20, which incorporates a lifting carriage 21 and a hydraulic lift cylinder 22, said cylinder being placed on the bed plate 18. The frame is secured to the rear cross-beams 23 of the supporting-frame structure and includes two guide rails 24 for receiving rollers 25 located on the lifting carriage 21. Mounted on the piston rod 26 of the cylinder 22 is a yoke 27 having two symmetrically arranged sprocket wheels 28. Extending over the sprocket wheels 28 are respective chains 29, said chains being located between the backpiece 30 of the lifting carriage and a rear cross beam 31 of the frame 19, such that the carriage is lifted with the aid of the chains 29 when the piston rod 26 is extended in the manner illustrated to the right of Figure 2. During this lifting movement, the lifting carriage is guided by the rollers 25, said rollers being journalled in respective brackets 32 mounted on the backpiece 30. Extending at right angles from respective ends of the backpiece are two lifting arms 33, the lifting carriage 21 obtaining a substantially U-shape.

The free space 15 for accommodating the pallets 16 is defined by front and back guide plates or guide rails 35 and 36 respectively. The guide rails 35, 36 extend from the bottom part 17, up to the roof 37 of the magazine and the upper parts of said rails are stiffened by means of side strutts 38. A protection net 39 covers the long sides of the lower part of the magazine. The rear side of the magazine may also be covered with a protecting net, if so desired. Two mutually parallel support beams 40 are arranged in the bottom part of the magazine, to form the bottom 41 of the magazine, said bottom being suitably spaced from the support structure 12. The beams 40 are welded to the forward guide rails 35 and to the bed plate 18 respectively.

On each of the lifting arms 33 there is arranged a gripping means having the form of two, pivotable lifting forks 45, c.f. Figure 3. The lifting forks are permanently mounted on a rotatable rod 46, which is guided by tubular sleeves 47 so as to rotate about an axis 48, parallel with the lifting arm 33. Each lifting fork 45 comprises a metal plate 49, which is excentrically mounted on the rod 46, such that the rear edge 50 of the plate abuts the lifting arm 33 in the downwardly swung gripping position of the lifting fork, as shown in Figure 5. The lifting forks can be swung upwardly from said position through an angle of approximately 90°, c.f. Figure 4. A control means, generally referenced 51, is allocated to the lifting forks 45 on each lifting arm 33, so as to swing said forks upwardly to the release position illustrated in Figure 4, at a given height of the lifting carriage 21. Each of the control means 51 includes a line 52, which extends over a line guide having the form of a wheel 53 and mounted on the frame 19. One end 54 of the line is attached to a spring 55 mounted on the outer end of a lever 56, which is fixedly connected to the rod 46. The other end 57 of said line is attached to a counterweight 58, which is guided in a guide tube 59 having an end stop 60. The length of the line is adjusted so that the counterweight 58 contacts the end stop or line stop 60 when the lifting carriage 21 sinks to a previously selected distance from the magazine bottom 41. When the lifting carriage sinks below this preselected position, the line will cause the lifting forks to swing upwardly, with the aid of the lever 56. This position is suitably taken when the lifting carriage is located slightly above its lower terminal position. When the counterweight reaches the end stop 60, the spring 55 permits the lifting carriage to sink further, with the lifting forks still in their upwardly lifted position. The spring end 54 of the line can be stopped at mutually different heights, by vertically displacing the guide tube 59, thereby enabling the position at which the lifting forks are pivoted to be changed. Alternatively the line can be provided with a lock ring capable of being locked in different positions along said line and co-acting with a stop shoulder arranged on said frame to stop the movement of said line.

The magazine, which is arranged for the receipt, storage and removal of pallets, has the following mode of operation; when one or more pallets are to be introduced into the magazine, said pallets are suitably lifted on a pallet trolley 64 or like device, and the trolley is moved into a lower receiving part 65 of the free space 15, so that the pallets occupy the position illustrated in chain lines in Figure 3. This can be effected without obstruction from the lifting forks 45, since said forks occupy their upwardly swung position when the lifting carriage 21 occupies its bottom position, see the left hand side of Figure 2. When the operator starts the lifting arrangement 20, by pressing an operating button 66, the lifting carriage begins to rise vertically from said bottom position. As the carriage is raised, the load on the line 52 progressively decreases, as a result of the compression or contraction of the spring 55. When the spring is fully compressed, further raising of the lifting carriage causes the lifting forks, under the influence of their own weight and due to their excentric mounting on the rod 46, to begin to rotate outwardly towards the pallets. In the case of EUR-pallets, the line stop 60 is suitably positioned so that the lifting forks 45 swing into the space 67 between the deck planks 68 and the bottom planks 69 of the lowermost pallet, which is still held lifted by the pallet trolley 64. Because the pivoting movement of the lifting forks takes place while the lifting carriage continues along its vertical movement, the forks are able to swing in to the narrow spaced 67, without the points of the forks damaging the deck or bottom planks 68, 69. When the pallet trolley is further moved upwards, the pallet batch is lifted from the trolley, with the lifting forks abutting the deck planks on the lowermost pallet. The first pallet batch is raised to a suitable height, so that a new pallet batch can be introduced into the receiving part of the free space 15, as illustrated in Figure 8. The lifting carriage then places the first pallet batch onto the second pallet batch, and is then moved down to its bottom position. As the lifting carriage is lowered, the lifting forks slide against the sides of the pallets under the action of their own weight, until the counterweight 58 on the line 52 again reaches the line stop 60 and the lifting forks are swung up to their release position. The lifting carriage is then again moved upwardly from its bottom position with the lifting forks engaging the lowermost pallet of a further pallet batch. Further pallet batches, or single pallets, can be moved into the magazine in a similar fashion.

When the desired number of pallets have been introduced into the magazine, the lifting carriage is moved to its bottom position, the lowermost pallet being placed on the two mutually parallel support beams 40 in the bottom part 17. Because of the arrangement of the support beams, the lower pallet will be located slightly above the lifting forks when the lifting carriage is in its bottom position, c.f. the left hand part of Figure 2, this being necessary in order for the lifting forks to be able to swing out of gripping engagement beneath the pallet, to the upwardly swung position. When wishing to remove a pallet from the magazine, the lifting carriage is again lifted with the aid of the guide means 51 at the beginning of the lifting movement. When the lifting carriage has reached the aforementioned gripping levels for the lifting forks, the forks are swung out and enter the space between the deck planks and bottom planks of the next lowermost pallet, and upon continued lifting movement all pallets are lifted up in the magazine, with the exception of the lowermost pallet, which can be readily removed manually or with the aid of a pallet trolley. Subsequent hereto, the pallets are again lowered onto the support beams 40, and then again lifted so that the next pallet can be removed. If it is required to remove more than one pallet simultaneously from the magazine, the line stop 60, for example, can be moved to a different position, so that a desired number of pallets are passed by the lifting forks before said forks are felled.

An example of the method for storing and handling pallets in accordance with the invention is illustrated in Figs. 6—11. Thus, as beforementioned pallets are introduced in batches into the magazine, with the pallets lying one upon the other and raised on, for example, a pallet trolley. In Figure 7 the pallet trolley has been driven into the receiving part of the free space 15, and Figure 8 illustrates how pallets located in said space are raised with the lifting carriage, in order to prepare room for a further batch of pallets. In Figure 9, the first pallet batch has been lowered onto the newly introduced pallets, and a pallet carriage is ready to move in and fetch the lowermost pallet. In this connection, firstly all pallets in the magazine are lifted, in accordance with Figure 10, with the exception of the lowermost pallet, which can be removed with the aid of a pallet trolley, in accordance with Figure 11. Further features of the method are evident from the preceding description of the magazine.

It will be understood the invention is not restricted to the illustrated embodiment, but that modifications can be made within the scope of the following claims. For example, the lifting forks may be replaced with hydraulic piston-cylinder devices whose pistons may be extended horizontally and which can be activated by means of suitable devices for indicating the position of the lifting carriage. The illustrated embodiment, however, is to be preferred, since it operates automatically without requiring the provision of hydraulic or electrical components, which would otherwise complicate the construction and therewith render it more expensive.

## Claims

1. A method for storing and handling pallets, in which pallets (16) are introduced into a receiving part (65) at the lower end of a magazine which rests upon a support surface (12); in which prior to introducing a further pallet into said magazine, those pallets present in said magazine are lifted vertically by means of a lifting arrangement (20) incorporated therein, so that the receiving part (65) of said magazine is prepared for receiving said further pallet; in which the raised pallets are subsequently lowered with the aid of said lifting arrangement (20), so that said pallets rest on the further pallet; and in which the pallets being successively removed beginning with the lowermost pallet located nearest the supporting surface, while the remaining pallets are lifted by the lifting arrangement (20), characterized by introducing the pallets batchwise lying horizontally in a superposed relationship into said receiving part (65), by supporting each batch of pallets (16) on a pallet trolley or the like vehicle (64) which can be removed on the support surface (12), and by driving the vehicle (64) at least partially into the receiving part (65).

2. A method according to Claim 1, characterized by lifting a new batch of pallets to be introduced from its supported position on the vehicle with the aid of said lifting arrangement (20).

3. A magazine for storing and handling pallets, including a support frame-structure (11) having a bottom part (17) intended to be placed on a support surface (12); a free space (15) arranged in the support frame-structure for receiving and storing superposed pallets (16); a motor driven lifting arrangement (20) arranged on the supporting frame-structure and intended to co-act with pallets located in said space (15), said lifting arrangement (20) including gripping means (45) being movable between a gripping and a release position, such that they are able either to lift said pallet or to pass by said pallets when introducing further pallets into said magazine or discharging pallets therefrom, characterized in that a vertically movable lifting carriage (21) of U-shaped configuration is arranged to carry said gripping means (45) and to embrace said free space (15) with two lifting arms (33), that said gripping means (45) include a lifting fork structure mounted on each lifting arm (33), that each lifting fork structure comprises two tines (49) which are mounted on a common, rotatable rod (46), arranged in the longitudinal direction of each lifting arm (33), said tines (49) being swingable between an upwardly lifted and a downwardly swung position so as to take said release and gripping positions respectively, and in that control means (51) is arranged to control the angular position of the rod (46) relative to respective lifting arms (33) in dependence upon the position of the lifting carriage.

4. A magazine according to Claim 3, characterized in that the control means (51) includes a line (52) or like means, arranged to pass over a line guide (53) on the supporting frame-structure (11), and with one end (54) of said line connected to the rod (46).

5. A magazine according to Claim 4, characterized in that a line stop (60) is arranged on the supporting frame-structure to co-act with a projection (58) on the line (52); and in that the line is arranged to stretch when the projection (58) reaches the line stop (60), so as to rotate the rod (46) so that the lifting fork tines (49) are located at a distance from the pallets.

6. A magazine according to any of the Claims 3—5, characterized in that the lifting fork tines (49) are excentrically mounted on the rod (46), such that said tines are activated by their own weight in a first rotary movement directed towards the downwardly swung, gripping position.

7. A magazine according to Claim 6, characterized in that the line (52) is connected to the rod (46) via a lever (56) mounted on said rod, such that the lifting fork structure is activated by a second rotary movement, directed towards the upwardly lifted, release position, when the line (52) is stopped by the line stop (60).

## Patentansprüche

1. Verfahren zum Aufspeichern und Handhaben von Paletten, bei welchen Paletten (16) in einen Aufnahmeteil (65) am unteren Ende des Magazins eingebracht werden, das auf einer Abstützfläche (12) steht, wobei vor dem Einbringen einer weiteren Palette in das Magazin die in dem Magazin vorhandenen Paletten vertikal mit Hilfe einer eingebauten Hubeinrichtung (20) angehoben werden, so daß der Aufnahmeteil (65) des Magazins bereit zur Aufnahme weiterer Paletten ist, wobei ferner die angehobenen Paletten danach mit Hilfe der Hubeinrichtung (20) abgesenkt werden, so daß diese Paletten auf der weiteren Palette aufsitzen, wobei die Paletten sukzessive herausgenommen werden, beginnend mit der untersten Palette, die der Stützfläche am nächsten liegt, während die übrigen Paletten durch die Hubeinrichtung (20) angehoben werden, dadurch gekennzeichnet, daß die Paletten gruppenweise eingebracht werden und horizontal übereinander in dem Aufnahmeteil (65) angeordnet sind, daß ferner jede Gruppe von Paletten (16) auf einem Palettenwagen oder dergleichen Fahrzeug (64) angeordnet ist, der auf der Stützfläche (12) bewegbar ist, und daß das Fahrzeug (64) wenigstens teilweise in den Aufnahmeteil (65) hineinfahrbar ist.

2. Verfahren nach Anspruch 1, dadurch gekennzeichnet, daß eine neue Gruppe von einzubringenden Paletten aus ihrer abgestützten Position auf dem Fahrzeug mit Hilfe der Hubeinrichtung (20) angehoben wird.

3. Magazin zum Aufspeichern und Handhaben von Paletten mit einem Trägerrahmen (11) mit einem Bodenteil (17) der auf einer Abstützfläche (12) aufsitzt, einem freien Raum (15) in dem Trägerraum zur Aufnahme und Speicherung übereinander liegender Paletten (16), einer motorgetriebenen Hubeinrichtung (20) am Trägerrahmen, die mit Paletten in diesem Raum (15) zusammenwirkt, wobei die Hubeinrichtung (20) Greifeinrichtungen (45) aufweist, die zwischen einer Greifposition und einer Freigabeposition beweglich sind, derart, daß sie entweder die Palette anheben oder die Paletten vorbeilassen können, wenn weitere Paletten in das Magazin eingesetzt oder aus diesem entnommen werden, dadurch gekennzeichnet, daß ein vertikal beweglicher Hubwagen (21) mit U-Form vorgesehen ist, um die Greifeinrichtung (45) zu tragen, und um diesen freien Raum (15) mit den beiden Hubarmen (33) zu umfassen, daß die Greifeinrichtung (45) Hubgabeln umfaßt, die an jedem Arm (33) montiert sind, daß jede Hubgabel zwei Zinken (49) aufweist, die auf einer gemeinsamen drehbaren Stange (46) montiert sind, die in Längsrichtung jedes Hubarmes (33) angeordnet ist, daß die Zinken (49) zwischen einer oberen angehobenen Position und einer nach unten geschwenkten Position verschwenkbar sind, um diese Freigabeposition und die Greifposition entsprechend einzunehmen, und daß Steuereinrichtungen (51) vorgesehen sind, um die Winkelposition der Stange (46) relativ zu entsprechenden Hubarmen (33) abhängig von der Position des Hubwagens zu steuern.

4. Magazin nach Anspruch 3, dadurch gekennzeichnet, daß die Steuereinrichtung (51) eine Leine (52) oder dergleichen aufweist, welche über eine Führung (53) am Trägerrahmen (11) läuft, und daß ein Ende (54) der Leine mit der Stange (46) verbunden ist.

5. Magazin nach Anspruch 4, dadurch gekennzeichnet, daß ein Leinenanschlag (60) an dem Trägerrahmen angeordnet ist, der mit einem Ansatz (58) an der Leine (52) zusammenwirkt, und daß die Leine gespannt wird, wenn der Ansatz (58) den Anschlag (60) erreicht, um die Stange (46) zu drehen, so daß die Hubgabelzinken (49) in einem Abstand von den Paletten liegen.

6. Magazin nach einem der Ansprüche 3—5, dadurch gekennzeichnet, daß die Hubgabelzinken (49) exzentrisch auf der Stange (46) montiert sind, derart, daß die Zinken durch ihr eigenes Gewicht in eine erste Drehbewegung gebracht werden, die in Richtung auf die abwärts geschwenkte Greifposition gerichtet ist.

7. Magazin nach Anspruch 6, dadurch gekennzeichnet, daß die Leine (52) mit der Stange (46) über einen Hebel (56) verbunden ist, der an der Stange befestigt ist, derart, daß die Hubgabeln durch eine zweite Drehbewegung aktiviert werden, die auf die obere angehobene Freigabeposition gerichtet ist, wenn die Leine (52) durch den Anschlag (60) angehalten wird.

## Revendications

1. Procédé de stockage et de manutention de palettes, dans lequel des palettes (16) sont introduites dans une partie réceptrice (65) à l'extrémité inférieure d'un magasin reposant sur une surface de support (12); dans lequel, avant d'introduire une palette supplémentaire dans ce magasin, les palettes déjà présentes dans ce magasin sont soulevées verticalement au moyen d'un dispositif élévateur (20) incorporé au magasin, de telle sorte que la partie réceptrice (65) de ce magasin soit préparée pour recevoir ladite palette ajoutée;

dans lequel les palettes soulevées sont ultérieurement descendues à l'aide dudit dispositif élévateur (20), de telle sorte que ces palettes reposent sur la palette ajoutée; et dans lequel les palettes sont successivement extraites en commençant par la plus basse, la plus proche de la surface de support, pendant que les palettes restantes sont soulevées par le dispositif élévateur (20), caractérisé en ce que les palettes sont introduites, par lots dans lesquels elles reposent horizontalement en étant superposées, dans ladite partie réceptrice (65), en ce que chaque lot de palettes (16) est porté par un chariot porte-palettes (64) ou un véhicule analogue pouvant se déplacer sur la surface de support (12), et en ce que le véhicule (64) est conçu de manière à pénétrer au moins partiellement dans la partie réceptrice (65).

2. Procédé selon la revendication 1, caractérisé par le fait de soulever un nouveau lot de palettes à introduire, à partir de sa position où il repose sur le véhicule, à l'aide dudit dispositif élévateur (20).

3. Magasin pour le stockage et la manutention de palettes, comprenant une structure de chassis-support (11) ayant une partie inférieure (17) formant un fond, destinée à être placée sur une surface de support (12); un espace libre (15) ménagé dans la structure de chassis-support pour recevoir et stocker des palettes (16) superposées; un dispositif élévateur (20) motorisé, disposé sur la structure de chassis-support et destiné à coopérer avec les palettes situées dans ledit espace (15), ce dispositif élévateur (20) comportant des moyens de préhension (45) mobiles entre une position de préhension et une position de dégagement, de telle sorte qu'ils sont capables, soit de soulever ladite palette, soit de passer à l'écart desdites palettes lors de l'introduction d'autres palettes dans ledit magasin ou lors de l'extraction de palettes hors de ce magasin, caractérisé en ce qu'un chariot élévateur (21) mobile verticalement ayant une configuration en forme de U est aménagé pour porter lesdites moyens de préhension (45) et pour enjamber ledit espace libre (15) avec deux bras élévateurs (33), en ce que lesdits moyens de préhension (45) comprennent une structure de fourche élévatrice montée sur chaque bras élévateur (33), chaque structure de fourche élévatrice comprenant deux dents (49) montées sur une barre pivotante commune (46) disposée dans le sens longitudinal de chaque bras élévateur (33), ces dents (49) étant basculables entre une position relevée vers le haut et une position déployée vers le bas de manière à prendre respectivement ladite position de dégagement et ladite position de préhension, et en ce qu'un moyen de commande (51) est disposé pour commander la position angulaire de la barre (46) par rapport aux bras élévateurs (33) respectifs en fonction de la position du chariot élévateur.

4. Magasin selon la revendication 3, caractérisé en ce que le moyen de commande (51) comprend un câble (52) ou un moyen similaire, disposé de manière à passer sur une poulie de renvoi (53) sur la structure de chassis-support (11), une extrémité (54) de ce câble étant relié à la barre pivotante (46).

5. Magasin selon la revendication 4, caractérisé en ce qu'une butée (60) d'arrêt du câble est disposée sur la structure de chassis-support pour coopérer avec un contrepoids (58) sur le câble (52); et en ce que le câble est disposé de manière à s'allonger lorsque le contrepoids (58) atteint la butée (60) de manière à faire tourner la barre (46) de telle sorte que les dents (49) des fourches élévatrices soient situées à distance des palettes.

6. Magasin selon l'une quelconques des revendications 3 à 5, caractérisé en ce que les dents (49) des fourches élévatrices sont actionnées par leur propre poids dans un premier mouvement de rotation en direction de leur position de préhension, basculée vers le bas.

7. Magasin selon la revendication 6, caractérisé en ce que le câble (52) est relié à la barre pivotante (46) par un levier (56) monté sur ladite barre, de telle sorte que la structure de fourche élévatrice soit actionnée par un deuxième mouvement de rotation vers la position de dégagement, relevée vers le haut, lorsque le câble (52) est arrêté par la butée (60) d'arrêt du câble.

Fig.1

Fig. 3

Fig. 2

Fig. 4

Fig. 5

Fig. 6

Fig. 7

Fig. 8

Fig. 9

Fig. 10

Fig. 11

0 120 823